# EUROPEAN PATENT SPECIFICATION

(11) **EP 0 710 389 B1**
(45) Date of publication and mention of the grant of the patent: **07.01.1998**
(21) Application number: 94919781.8
(22) Date of filing: 07.07.1994
(51) Int. Cl.: G10K 9/12

(54) **ACOUSTIC TRANSMITTING AND RECEIVING UNIT**
AKOUSTISCHE SENDE- UND EMPFANGSEINHEIT
EMETTEUR-RECEPTEUR ACOUSTIQUE

(30) Priority: 09.07.1993 GB 9314327
(43) Date of publication of application: 08.05.1996
(73) Proprietor: GEC MARCONI LTD., Stanmore, Middlesex HA7 4LY (GB)
(72) Inventor: CROWTHER, Paul Andrew, 7 Holly Terrace, London N6 6LX (GB)
(74) Representative: Cockayne, Gillian
(86) International application number: GB9401470
(87) International publication number: WO9502237

(56) References cited:
- EP-A- 0 075 302
- DE-A- 4 238 924
- US-A- 3 846 650
- PATENT ABSTRACTS OF JAPAN vol. 14, no. 102 (E-0894) 23 February 1990 & JP,A,01 303 900 (MURATE MFG CO LTD) 7 December 1989
- PATENT ABSTRACTS OF JAPAN vol. 10, no. 48 (P-431) 25 February 1986 & JP,A,60 194 380 (MATSUSHITA DENKO KK) 2 October 1985
- RESEARCH DISCLOSURE, August 1992, HAVANT, UK page 655, XP324129 'Sonic obstacle detector'

## Description

This invention relates to an acoustic transmitting and receiving unit and particularly to such a unit for use in a vehicle parking aid.

The use of acoustic transmitters and receivers in cars and other road vehicles as parking aids are well known, employing echo ranging techniques. In these an acoustic pulse is emitted from an acoustic transmitter mounted on the car and any return signal that has bounced off any obstruction is received by an acoustic receiver, the distance to the obstruction is then calculated based on the time delay between transmission and reception and the car driver warned if this distance is below a threshold value.

Existing acoustic car parking aids of this type have been of two general types, in the first type the acoustic transmitters and receivers are hung from the bottom of the car so as to project below the bottom of the car to provide a good field of view to the rear of the car, and in the second type the acoustic transmitters and receivers are passed through holes in the plastic trim on the rear of the car, generally through the bumper bar.

In practice it has been found that neither of these approaches is satisfactory, acoustic transmitters and receivers mounted beneath the car are very vulnerable to damage by objects flung up from the road or passed over by the car as well as being in a very hostile environment from the point of view of corrosion because they are engulfed for long periods in water or salt water mist. As a result the reliable operation or even the physical survival of the acoustic transmitter receivers cannot be guaranteed for any length of time. An improvement on this approach has been to mount the actual acoustic transmitters and receivers on the underside of the car and use mirrors hanging beneath the car to give them a horizontal field of view beneath the rear of the car, these systems still suffer from corrosion problems and although it is cheaper to replace the mirrors than to replace the acoustic transmitters and receivers the reliability and lifetime of the system remain low because the mirrors are just as vulnerable to damage as the acoustic transmitters and receivers themselves in the basic system.

In systems in which the acoustic transmitters and receivers are passed through apertures in plastic parts of the car bodywork the operation of cutting the holes in the bodywork and sealing the holes around the acoustic transmitters and receivers has proved to be highly labour intensive and expensive, also corrosion damage and other environmental effects on the exposed parts of the transmitters and receivers have limited their reliability and life.

It has been proposed to use acoustic transducers situated behind the plastic bumper, but this has not been thought possible because the acoustic losses involved have made such systems unworkable.

This invention was produced in an attempt to provide an acoustic transducer overcoming these problems at least in part.

This invention provides an acoustic transmitting or receiving unit comprising a continuous substantially planar member, an element having a face defining an aperture, said face being attached to the planar member around the entire aperture such that a portion of the member covers the aperture, and an acoustic transducer attached to said portion such that movement of the portion of the member can be converted into electrical signals or vice-versa.

A separate set of claims has been submitted in respect of Germany, to distinguish over DE 4238924 which constitutes a prior national right.

This allows acoustic signals with a defined beamwidth to be transmitted through the member with relatively low loss.

A car parking aid embodying the invention will now be described, by way of example only, with reference to the accompanying figures, in which;
Figure 1 shows a general plan view of the car employing the car parking aid;
Figure 2 shows a cross sectional view through an acoustic transmitting and receiving unit according to the invention along the line B-B in Figure 3.
Figure 3 shows a view of the unit of Figure 1 cut away along the line A-A in Figure 1; and
Figure 4 shows a cross section view through an alternative form of acoustic transmitting and receiving unit, identical parts having the same reference numerals throughout.

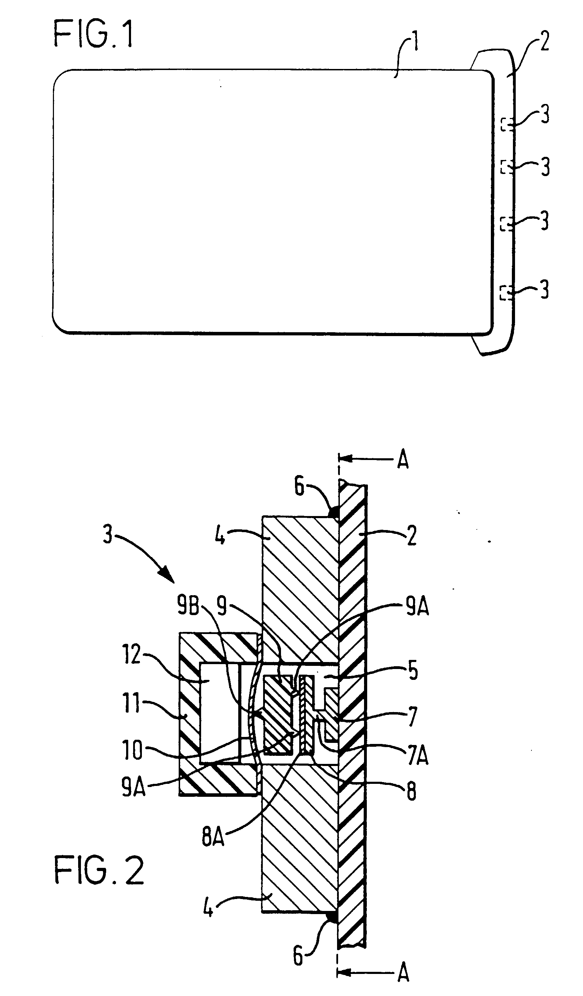

Referring to Figure 1 a car 1 is shown having a plastic bumper bar 2 at its rear. A plurality of acoustic transmitting and receiving units 3 are mounted within the bumper bar 2 facing rearwards. Each transmitter and receiver unit 3 transmits a series of acoustic pulses to form an acoustic beam having a beam width of 120° horizontally and 50° vertically and receives return signals from the same region and is linked to a signal processor forming part of a car parking aid.

Referring to Figure 2 a single transmitter/receiver unit 3 is shown in more detail. The transmitter/receiver unit 3 comprises a stainless steel aperture plate 4 penetrated by a rectangular aperture 5, the front face of the aperture plate 4 is ultrasonically welded to the plastic material of the bumper bar 2 across the whole face of the aperture plate 4. Provided the front face of the aperture plate 4 is secured to the bumper bar 2 the surface finish of this face is not important. The ultra sonic welding leaves a fillet 6 of plastics material from the bumper bar around the edge of the aperture plate 4. Within the aperture 5 is a rectangular drive bar 7 which is glued across its contact area with the bumper bar 2 and ultrasonically welded around its edge to secure it to the bumper bar 2.

The drive bar 7 is secured to the bumper bar 2 in the centre of the aperture 5 and a narrow extension 7A of the drive bar 7 links it to a bending mode transducer 8, the extension 7A extending from the centre of the drive bar 7 and contacting the bending mode transducer at its centre.

The bending mode transducer 8 comprises a rectangular metal main body with a thin layer of piezoelectric material 8A on its face facing away from the bumper bar 2 and is urged against the bumper bar 2 by a plastic support 9 having two support ridges 9A extending into contact with the bending mode transducer 8. The positions of the extension 7 and support ridges 9A are arranged with the extension 7A in the centre of the bending mode transducer 8 and each of the support ridges 9A approximately one quarter of the bending mode transducer 8's length from one of its ends such that when the bending mode transducer 8 is oscillating in its bending mode the support ridges 9A are situated at nodal points of minimum displacement while the extension 7A is situated at an antinodal point of maximum displacement.

The plastic support 9 is in tum urged towards the bumper 2 by a support spring 10 which bears on a support ridge 9B in the middle of the support on the opposite face to the support ridges 9A. The spring 10 is held in place by being clamped between the rear face of the aperture plate 4 and a housing 11 which contains electronic components 12 for driving and processing retum signals from the transducer 8. The support spring 10 reduces the strain on the glue and welds securing the drive bar 7 to the bumper 2 by urging the drive bar 7 towards the bumper 2 and so reduces the tendency for the drive bar 7 to separate from the bumper 2.

The use of rectangular symmetrically arranged components allows a rectangular symmetrical acoustic beam to be generated, but other shapes such as ellipses or circles for example could be used if desired.

Wires (not shown) lead from the electronics 12 to the bending mode transducer 8 such that in transmit mode a variable electric field can be generated across the piezoelectric material 8A and in the receive mode electrical potentials generated across the piezoelectric layer 8A can be picked up and sent to the electronics 12 for processing.

In operation, in the transmit mode the bending mode transducer 8 bends in oscillating motion with an antinode at the centre of its length and thus drives the drive bar 7 through the extension 7A and causes the portion of the bumper bar 2 in front of the aperture 5 to move in and out driven by the oscillations of the transducer 8 and this movement generates acoustic signals in the air which then radiate outwards. The portion of the bumper bar 2 welded to the aperture plate 4 is unable to move due to the very high rigidity of the steel aperture plate 4 compared to that of the bumper bar 2 and as a result only that part of the bumper bar 2 covering the aperture 5 moves. As a result the beam width and shape of the acoustic signal transmitted can be controlled by altering the dimensions and shape of the aperture 5, the larger the aperture 5 dimension in a given direction the smaller the beam width will be and vice versa. The aperture 5 shown is longer vertically than horizontally because a beam wider in the horizontal than the vertical is required.

Similarly when return acoustic signals strike the bumper bar 2 only the oscillations of the portion of the bumper bar 2 in front of the aperture 5 drives the bending mode transducer 8 by way of the drive bar 7 and generates electrical signals.

Since a plurality of transmit/receive units are used simultaneously it will be necessary for the signal processing system of the car parking aid to use some means to distinguish between the signals transmitted by the different units, such techniques are very well known in the field of acoustic sensing as are the general operating principles of such an echo ranging system and need not be detailed here.

In practice some of the acoustic energy injected into the bumper bar 2 in front of the aperture 5 will travel along the bumper parallel to its surface rather than excaping into the air through the bumper bar 2, this acoustic energy in the bumper bar 2 will be picked up by the other transducers and will produce cross talk problems due to acoustic energy being transmitted from one transmit/receive unit to another directly along the bumper material rather than through the air, thus generating false alarms. The amount of cross talk can be reduced simply by increasing the size of the aperture plate 4 to increase the distance around the aperture 5 over which the aperture plate 4 is welded to the bumper bar 2. This region in which the bumper bar 2 is unable to oscillate due to its attachment to the relatively rigid aperture plate 4 will damp acoustic waves in the bumper bar to a great degree, so by producing an aperture plate of an appropriate size the amount of cross talk can be reduced to any desired value at which it will be low enough to not cause problems.

As well as eliminating cross talk this acoustic isolation of the portion of the bumper 2 covering the aperture 5 from the bulk of the bumper 2 also prevents the problems of acoustic energy from the transmit/receive units 3 travelling along the bumper and then re-transmitting from distant points on the bumper surface and producing false signals which interfere with the true ones and also the problem of acoustic energy being absorbed by the bumper surface at remote points and this energy then being carried back to the transmit/receive units to cause interference problems.

Although this invention has been discussed in terms of a plastic bumper it would be possible to use a system of this type to transmit through any solid material such as a metal plate, but in order to allow a large degree of acoustic damping by the aperture plate transmission through a plastic material is advantageous. Any well known method of securing the drive bar and aperture plate to the bumper material could be used such as glues, ultrasonic welding or actually molding the plastics material around the parts to be secured for example. Instead of a metal bending mode transducer bearing a piezoelectric ceramic layer a bending mode transducer made entirely of piezoelectric ceramic or plastic material could be used, alternatively the bumper itself could be made of an acoustically sensitive plastic such as poly Vinylidine fluoride (PVDF) which can be made electrostictive and the electrical drive and receive signals could be applied to or taken from the bumper material fronting the aperture 4 directly.

Although the system has been described in terms of a car parking aid it will be understood that such a system could be used for any other vehicle or in any other distance measuring application and in particular could be used as a car alarm by mounting it on the inside of a vehicle interior plastic facia instead of a bumper and sounding an alarm if the retum acoustic signal from the interior of the car changes.

The drive bar and bending mode transducer can be made monolithically from a single metal element, of aluminium, for example, or alternatively could be made of several parts and braized or welded or secured together in some other known manner.

The aperture plate 4 could be made of aluminium or brass for example instead of stainless steel or could be made of any other material having a suitable stiffness compared to that of the bumper material.

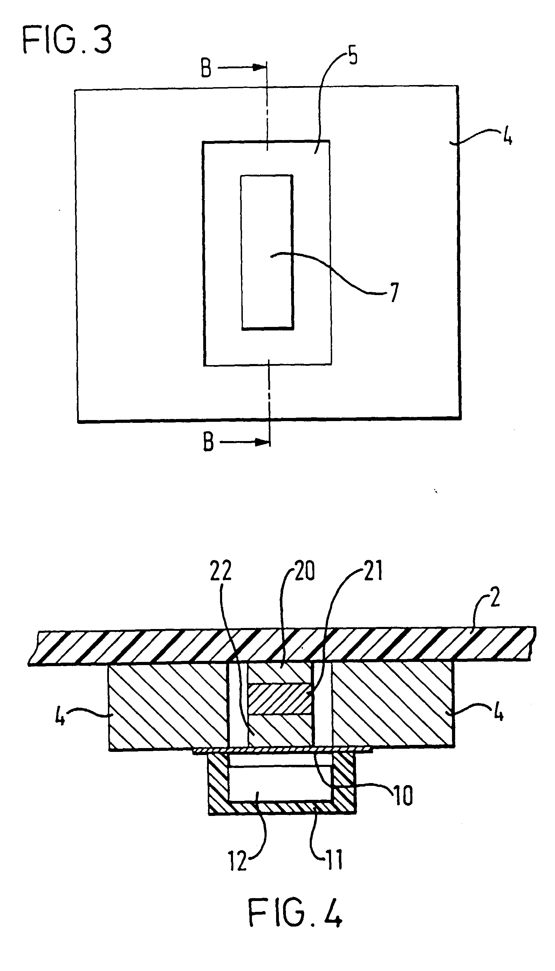

An alternative design is shown in Figure 4 in which the drive bar 7 and bending mode transducer 8 are replaced by a drive mass 20 secured to the bumper, a piezoelectric ceramic block 21 secured to the drive mass 20 and a counterweight mass 22 secured to the opposite face of the piezoelectric ceramic block 21. By applying an electric potential across the piezoelectric ceramic block 21 the weights 20 and 22 can be driven into oscillation in antiphase to one another causing the part of the bumper across the front of the aperture 4 to move and the reverse process can be used to convert incident acoustic signals to electrical potentials across the ceramic block 21. However the system shown in Figure 2 is felt to be advantageous where a plastic bumper is used because it allows better impedance matching between the drive system and the bumper material.

## Claims (Claims for the following Contracting State(s): ES, FR, GB, IT, NL, SE)

1. An acoustic transmitting or receiving unit comprising a continuous substantially planar member, an element having a face defining an aperture, said face being attached to the planar member around the entire aperture such that a portion of the member covers the aperture, and an acoustic transducer attached to said portion such that movement of the portion of the member can be converted into electrical signals or vice-versa.

2. A unit as claimed in claim 1 in which the unit is both a transmitting and a receiving unit.

3. A unit as claimed in claim 1 or claim 2 in which the member is plastic.

4. A unit as claimed in any preceding claim in which the member is a vehicle bumper.

5. A unit as claimed in any preceding claim when forming part of a vehicle parking aid.

## Claims (Claims for the following Contracting State(s): DE)

1. An acoustic transmitting or receiving unit comprising a continuous substantially planar non metallic member, an element having a face defining an aperture, said face being attached to the planar member around the entire aperture such that a portion of the member covers the aperture, and an acoustic transducer attached to said portion such that movement of the portion of the member can be converted into electrical signals or vice-versa.

2. A unit as claimed in claim 1 in which the unit is both a transmitting and a receiving unit.

3. A unit as claimed in claim 1 or claim 2 in which the member is plastic.

4. A unit as claimed in any preceding claim in which the member is a vehicle bumper.

5. A unit as claimed in any preceding claim when forming part of a vehicle parking aid.

## Patentansprüche (Patentansprüche für folgende(n) Vertragsstaat(en): ES, FR, UK, IT, SE)

1. Akustische Sende- oder Empfangseinheit mit einem kontinuierlichen, im wesentlichen ebenen Element, einem Element, das eine Fläche aufweist, die eine Öffnung definiert, wobei die Fläche an dem ebenen Element um die gesamte Öffnung herum derart angebracht ist, daß ein Abschnitt des Elements die Öffnung bedeckt, und einem akustischen Wandler, der an dem Abschnitt derart angebracht ist, daß eine Bewegung des Abschnitts des Elements in elektrische Signale umgewandelt werden kann oder umgekehrt.

2. Einheit nach Anspruch 1,
in der die Einheit sowohl eine Sende- als auch eine Empfangseinheit ist.

3. Einheit nach Anspruch 1 oder Anspruch 2,
in der das Element aus Kunststoff besteht.

4. Einheit nach einem der vorhergehenden Ansprüche,
in der das Element ein Fahrzeugstoßfänger ist.

5. Einheit nach einem der vorhergehenden Ansprüche,
wenn sie einen Teil einer Fahrzeugparkhilfe bildet.

## Patentansprüche (Patentansprüche für folgende(n) Vertragsstaat(en): DE)

1. Akustische Sende- oder Empfangseinheit mit einem kontinuierlichen, im wesentlichen ebenen, nicht metallischen Element, einem Element, das eine Fläche aufweist, die eine Öffnung definiert, wobei die Fläche an dem ebenen Element um die gesamte Öffnung herum derart angebracht ist, daß ein Abschnitt des Elements die Öffnung bedeckt, und einem akustischen Wandler, der an dem Abschnitt derart angebracht ist, daß eine Bewegung des Abschnitts des Elements in elektrische Signale umgewandelt werden kann oder umgekehrt.

2. Einheit nach Anspruch 1,
in der die Einheit sowohl eine Sende- als auch eine Empfangseinheit ist.

3. Einheit nach Anspruch 1 oder Anspruch 2,
in der das Element aus Kunststoff besteht.

4. Einheit nach einem der vorhergehenden Ansprüche,
in der das Element ein Fahrzeugstoßfänger ist.

5. Einheit nach einem der vorhergehenden Ansprüche,
wenn sie einen Teil einer Fahrzeugparkhilfe bildet.

## Revendications (Revendications pour l'(les) Etat(s) contractant(s) suivant(s): ES, FR, UK, IT, SE)

1. Appareil d'émission ou de réception acoustique comportant une pièce continue, sensiblement plane, un élément présentant une face définissant une ouverture, ladite face étant fixée à la pièce plane autour de la totalité de l'ouverture de façon qu'une portion de la pièce recouvre l'ouverture, ainsi qu'un transducteur acoustique fixé à ladite portion de façon que le mouvement de la portion de la pièce puisse se convertir en signaux électriques ou vice versa.

2. Appareil comme revendiqué dans la revendication 1, dans lequel l'appareil est à la fois un appareil émetteur et un appareil récepteur.

3. Appareil comme revendiqué dans la revendication 1 ou dans la revendication 2 dans lequel la pièce est en plastique.

4. Appareil comme revendiqué dans l'une des revendications précédentes dans lequel la pièce est un pare-chocs de véhicule.

5. Appareil comme revendiqué dans l'une quelconque des revendications précédentes lorsqu'il fait partie d'une aide au parcage d'un véhicule.

## Revendications (Revendications pour l'(les) Etat(s) contractant(s) suivant(s): DE)

1. Appareil d'émission ou de réception acoustique comportant une pièce non métallique continue, sensiblement plane, un élément présentant une face définissant une ouverture, ladite face étant fixée à la pièce plane autour de la totalité de l'ouverture de façon qu'une portion de la pièce recouvre l'ouverture, ainsi qu'un transducteur acoustique fixé à ladite portion de façon que le mouvement de la portion de la pièce puisse se convertir en signaux électriques ou vice versa.

2. Appareil comme revendiqué dans la revendication 1, dans lequel l'appareil est à la fois un appareil émetteur et un appareil récepteur.

3. Appareil comme revendiqué dans la revendication 1 ou dans la revendication 2 dans lequel la pièce est en plastique.

4. Appareil comme revendiqué dans l'une des revendications précédentes dans lequel la pièce est un pare-chocs de véhicule.

5. Appareil comme revendiqué dans l'une quelconque des revendications précédentes lorsqu'il fait partie d'une aide au parcage d'un véhicule.
